# EUROPÄISCHE PATENTANMELDUNG

(11) **EP 4 032 740 A1**
(43) Veröffentlichungstag der Anmeldung: **27.07.2022**
(21) Anmeldenummer: 22151332.8
(22) Anmeldetag: 13.01.2022
(51) Int. Cl.: B60L 5/08, B60L 5/12, B60L 5/36

(54) **STROMABNEHMER-ANORDNUNG FÜR DOPPELPOLIGE FAHRDRÄHTE**

(30) Priorität: 22.01.2021 DE 202021100305 U
(71) Anmelder: Deutzer Mobility Solutions GmbH, 15741 Bestensee (DE)
(72) Erfinder: Deutzer, Manfred, 15738 Zeuthen (DE); Fröhlich, Stefan, 15754 Heidesee OT Prieros (DE)
(74) Vertreter: Weisse, Renate

(57) **Zusammenfassung**

Eine Stromabnehmer-Anordnung für doppelpolige Fahrdrähte (12, 14) von fahrdrahtgespeisten Fahrzeugen (10), die auch unabhängig vom Fahrdrahtsystem fahren können, enthaltend eine oder mehrere gelenkig an einem Fahrzeug (10) befestigbare Stromabnehmerstangen (16, 18); und wenigstens zwei Gleitflächen (30, 38; 40, 42) zur Kontaktierung der Stromabnehmer-Anordnung mit den Fahrdrähten (12, 14) eines Fahrdrahtsystems; ist dadurch gekennzeichnet, dass die Gleitflächen (30, 38; 40, 42) von jeweils ebenen Flächen gebildet sind, von denen jede mit der vertikalen Ebene parallel zur Fahrtrichtung einen Winkel bildet, so dass die Kontaktierung an den Fahrdrähten zumindest teilweise seitlich erfolgt.

## Beschreibung

### Technisches Gebiet

Die Erfindung betrifft eine Stromabnehmer-Anordnung für doppelpolige Fahrdrähte von fahrdrahtgespeisten Fahrzeugen, die auch unabhängig vom Fahrdrahtsystem fahren können, enthaltend
(a) eine oder mehrere gelenkig an einem Fahrzeug befestigbare Stromabnehmerstangen; und
(b) wenigstens zwei Gleitflächen zur Kontaktierung der Stromabnehmer-Anordnung mit den Fahrdrähten eines Fahrdrahtsystems.

Die Erfindung betrifft ferner ein elektrisch angetriebenes, aus einem doppelpoligen Fahrdraht speisbares Fahrzeug, das auch unabhängig vom Fahrdrahtsystem fahren kann.

Die Erfindung betrifft weiterhin ein Beförderungssystem zur Beförderung von Personen und/oder Gütern entlang wenigstens eines Beförderungsweges; enthaltend
(a) ein Fahrdrahtsystem mit zwei Fahrdrähten, welches sich zumindest über eine Teilstrecke des Beförderungsweges erstreckt; und
(b) wenigstens ein Fahrzeug.

Fahrdrahtgespeiste Fahrzeuge sind beispielsweise Oberleitungsbusse, auch als O-Bus oder Trolleybus bezeichnet. Es gibt aber auch andere fahrdrahtgespeiste Fahrzeuge, etwa zur Beförderung von Gütern.

Die Fahrzeuge haben einen Elektromotor und werden mit Strom aus einer Oberleitung gespeist. Die Oberleitung ist über der Fahrbahn gespannt und zweipolig ausgeführt. Die Oberleitungsbusse können vermittels ihrer langen Stromabnehmer angedrahtet bis zu drei Fahrspuren überstreichen, besitzen also eine gute Manövrierfähigkeit.

Die elektrische Energie wird über Stromabnehmer vom Fahrdraht zum Elektromotor geleitet. Da die Fahrzeuge nicht schienengebunden sind und dadurch keinen Rückleiter haben, sind immer zwei Fahrdrähte für die Versorgung mit elektrischer Energie erforderlich. Typischerweise sind die Stromabnehmer stangenförmig ausgebildet. Am oberen Ende der Stange ist jeweils ein Stromabnehmerkopf, auch als Stromabnehmerschuh, Schleifschuh oder Gleitschuh bezeichnet, befestigt. Unter Stromabnehmerstange wird jede Stange verstanden, an der der Strom vom Stromabnehmer-Kopf zum Fahrzeug geleitet wird. Dies kann mittels Kabelführung oder über die Stange selber erfolgen.

Als Stromabnehmer-Anordnung wird hier eine Anordnung mit einem Stromabnehmer und weiteren Komponenten, etwa Befestigungselementen, Gelenken, Gleitschuhen und dergleichen bezeichnet. Die Stromabnehmer sind an die Oberseite des Fahrzeugs angelenkt und flexibel ausgebildet. Dadurch wird ein guter Kontakt auch dann gewährleistet, wenn der Abstand zwischen Fahrbahndecke und Fahrdraht variiert oder die Fahrspur des Fahrzeugs von der Spur des Fahrdrahts abweicht. Dies ist insbesondere dann erforderlich, wenn sich Hindernisse auf der Fahrspur befinden, eine Haltestelle angefahren werden soll oder wenn gewünscht ist, dass sich die Fahrdrähte nicht unmittelbar über der Fahrbahn befinden sollen.

### Stand der Technik

Aufbau und Funktionsweise von fahrdrahtgespeisten Fahrzeugen sind auf der Webseite https://de.wikipedia.org/wiki/Oberleitungsbus am 19. Januar 2021 ausführlich beschrieben. Nachteilig bei den aus der Praxis bekannten, fahrdrahtgespeisten Fahrzeugen ist es, dass die Fahrzeuge nur im Bereich der Fahrdrähte fahren können und das An- und Abdrahten von Hand vorzunehmen ist. Umleitungen, verkürzter Nachtverkehr oder kurzfristige Linienänderungen sind daher nur bei Strecken möglich, die ebenfalls Fahrdrähte aufweisen. Zudem ist es aufwändig und teuer, entfernte Orte mit wenig Fahrgastaufkommen in das Streckennetz zu integrieren.

Es ist bekannt, fahrdrahtgespeiste Fahrzeuge mit einem wiederaufladbaren Akkumulator oder einem zusätzlichen Verbrennungsmotor zu versehen. Der Akkumulator kann über den Fahrdraht geladen werden. Mit solchen Fahrzeugen können auch Strecken ohne Fahrdraht befahren werden. Dann müssen die Stromabnehmer am Übergang an- bzw. abgedrahtet werden. Hierzu steigt der Fahrzeugführer oder die Fahrzeugführerin aus und führt das Andrahten oder Abdrahten von Hand durch. Das ist aufwändig.

DE 10 2013 019 534 A1 und DE 10 2014 014 200 A1 offenbaren eine Eindrahtvorrichtung für fahrdrahtgebundene Fahrzeuge. Die Fahrdrähte werden in einem Eindrahtbereich mit einem Führungsdraht oder einer Führungsstange ergänzt. Die Vorrichtung ermöglicht das Andrahten während der Fahrt. Zusammen mit leistungsfähigeren Akkumulatoren kann das Fahrzeug auch auf Strecken ohne Fahrdraht eingesetzt werden. Die Aufladung der Akkumulatoren kann durch Rekuperation und/oder über Energieversorgung aus den Fahrdrähten erfolgen. Eine solche Aufladung ist mit geringerer Ladeleistung verbunden und somit schonender als das Aufladen mit hoher Leistung. Dabei spielt die Ladezeit keine Rolle, denn das Fahrzeug ist auch während des Ladevorgangs in Betrieb.

Nachteilig bei der bekannten Eindrahtvorrichtung ist es, dass die Vorrichtung nur an neuen Fahrzeugen eingesetzt werden kann, da bekannte Fahrzeuge mit zwei und nicht mit einer Stange ausgestattet sind. DE 10 2019 122 471 A1 offenbart eine Stromabnehmer-Anordnung, mit welcher auch Fahrzeuge mit zwei Stangen angedrahtet werden können. Hierzu wird ein dritter Fahrdraht in einem Eindrahtbereich vorgesehen.

Unter dem Begriff eHighway auf der Webseite https://press.siemens.com/global/de/feature/ehighway-loesungen-fuer-denelektrifizierten-strassengueterverkehr ist ein Beförderungssystem für Güter bekannt. Die Stromabnehmer umfassen zwei horizontale Gleitflächen, die an kurzen Gestängen montiert sind und in vertikaler Richtung an die Fahrdrähte herangeführt werden können. Diese Fahrzeuge sind allerdings angedrahtet so gut wie nicht manövrierfähig und die Fahrdrähte müssen sich zwingend über der Fahrspur befinden, wodurch die Fahrspur zum Beispiel für sperrige Schwertransporte nicht genutzt werden kann.

### Offenbarung der Erfindung

Es ist Aufgabe der Erfindung, eine Stromabnehmer-Anordnung der eingangs genannten Art zu schaffen, mit welcher ein Fahrzeug an beliebiger Stelle der Fahrleitung ohne zusätzliche Hilfsmittel angedrahtet werden kann und welche einen gleichmäßigen Abrieb der Gleitflächen bewirkt.

Erfindungsgemäß wird die Aufgabe dadurch gelöst, dass die Gleitflächen von jeweils ebenen Flächen gebildet sind, von denen jede mit der vertikalen Ebene parallel zur Fahrtrichtung einen Winkel bildet, so dass die Kontaktierung an den Fahrdrähten zumindest teilweise seitlich erfolgt. Insbesondere können die Gleitflächen V-förmig oder umgekehrt V-förmig (A) zueinander angeordnet sein.

Die Winkel bewirken, dass es immer eine Höhe an den Gleitflächen gibt, die dem Abstand der Fahrdrähte entspricht. Die geneigten Gleitflächen passen sich an verschiedene Abstände an. Es ist keine genaue Justierung erforderlich. Dadurch wird der Stromabnehmerkopf am Fahrdraht-System geführt. Zum Andrahten werden die Gleitflächen einfach an die Fahrdrähte herangeführt und beispielsweise mit einer Feder angedrückt. Die erfindungsgemäßen Gleitflächen sind typischerweise deutlich größer, als die Gleitflächen bei bekannten Gleitschuhen und haben Abmessungen, welche in der Größenordnung des Abstands der Fahrdrähte liegen.

Vorzugsweise ist vorgesehen, dass die Gleitflächen an Gleitstücken vorgesehen sind, welche mit einem elektrisch isolierenden Abstandshalter Teil eines gemeinsamen Stromabnehmerkopfes bilden. Es sind also keine zwei Stromabnehmerköpfe - einer für jeden Fahrdraht - vorgesehen, sondern ein gemeinsamer Stromabnehmerkopf an dem beide Gleitstücke mit festem Abstand zueinander fixiert sind. Der Abstandshalter kann beispielsweise aus einem flexiblen Material gebildet sein. Dadurch wird ein gleichmäßiger Anpressdruck erreicht.

An den Enden der Gleitflächen können jeweils eine vorspringende Kante oder andere Entgleisungsschutzelemente vorgesehen sind und/oder zwischen den Gleitflächen Anschläge vorgesehen sein, welche ein Hinüberlaufen des Fahrdrahtes zur jeweils anderen Gleitfläche verhindern. Dann sind die Enden der Gleitstücke derart ausgebildet, dass ein ungewolltes Hinauslaufen des Fahrdrahtes verhindert wird. Die Entgleisungsschutzelemente können von einer in Richtung der Fahrdrähte vorspringenden Kante am Ende des Gleitstücks gebildet sein. Dabei kann ein Entgleisungsschutzelement als gesondertes Element befestigt sein oder durch Formgebung, etwa eine Krümmung oder dergleichen, gebildet und in das Gleitstück integriert sein.

Bei einer weiteren Ausgestaltung der Erfindung sind wenigstens zwei Paare ebener Gleitflächen an dem gemeinsamen Stromabnehmerkopf vorgesehen. Dadurch wird eine vergrößerte Kontaktfläche mit geringerem elektrischen Widerstand erreicht.

Es können eine oder mehrere Stangen, Seile oder andere Führungselemente an einen gemeinsamen Stromabnehmerkopf angelenkt sein. Insbesondere kann vorgesehen sein, dass der gemeinsamen Stromabnehmerkopf gelenkig mit den Stromabnehmerstangen verbunden ist, welche an ein Fahrzeug anlenkbar sind und deren Bewegungen derart geführt sind, dass die Stromabnehmerstangen stets in einer gemeinsamen Ebene angeordnet sind.

Dadurch wird erreicht, dass der Stromabnehmerkopf immer die gleiche Ausrichtung zum Fahrdraht hat. Als Führung kann beispielsweise eine dritte Stange zur Führung der Stromabnehmerstangen an den Stromabnehmerkopf angelenkt sein. Durch die Verwendung mehrerer Stangen, deren Endpunkte flexibel mit dem Fahrzeug bzw. dem Stromabnehmerkopf verbunden sind, kann erreicht werden, dass bei zwei Stangen die Ausrichtung zur Fahrtrichtung des Fahrzeugs und bei mindestens drei Stangen auch die Parallelität zwischen Fahrzeug und Stromabnehmerkopf sichergestellt wird.

Die Gelenke an den Enden der Stangen können von Kugelgelenken oder Kardangelenken gebildet sein. Es sind aber auch alle anderen gelenkigen Verbindungen, etwa durch flexible Materialien oder dergleichen möglich.

Vorzugsweise ist ein Federmechanismus oder eine andere Andrückeinrichtung zum Andrücken der Gleitflächen an die Fahrdrähte vorgesehen. Mit dem Federmechanismus werden die Gleitflächen an die Fahrdrähte angedrückt und gleichzeitig eine seitliche Führung gewährleistet. Je nach Abstand der Fahrdrähte erfolgt die Kontaktierung in Bereichen unterschiedlicher Höhe. Dadurch wird ein gleichmäßiger Abrieb erreicht. Statt eines Federmechanismusses können auch hydraulische, pneumatische oder motorische Kräfte zum Andrücken der Gleitflächen eingesetzt werden. Insbesondere, wenn kein Federmechanismus verwendet wird, kann es sinnvoll sein, einen optischen Sensor oder einen Kraftsensor zu verwenden, mit dem die Position der angelenkten Stangen nachregelbar ist. Dies dient dazu, den elektrischen Kontakt bei Abstandsänderungen zwischen Fahrzeug und Fahrdraht aufrechtzuerhalten und die Position der angelenkten Stangen an die äußeren Gegebenheiten anzupassen.

Wenn das Fahrzeug automatisch andrahten soll, ist es sinnvoll, wenn eine Stellvorrichtung vorgesehen ist, welche von den Signalen eines Sensors zur Erfassung eines Fahrdrahtsystems beaufschlagt ist und mit welcher die Gleitflächen mit den Fahrdrähten kontaktierbar ist. Der Sensor erfasst, ob das Fahrzeug im Bereich eines Fahrdrahtsystems fährt. Wenn dies der Fall ist, wird die Stellvorrichtung aktiviert und die Gleitflächen können an die Fahrdrähte heranbewegt und dort kontaktiert werden. Umgekehrt kann die Stromabnehmeranordnung am Ende einer Fahrdraht-Strecke nach unten in eine Ruheposition bewegt werden. Die Sensorik kann optisch, mittels Ultraschall oder elektromagnetisch arbeiten. Ein ggf. erforderlicher Empfänger kann beispielsweise am Stromabnehmerkopf oder an dem dem Fahrzeug abgewandten Ende der Stromabnehmerstangen angeordnet sein. Dabei kann der Stromabnehmerkopf durch Betätigung der Stellvorrichtungen der Stangen an die Fahrdrähte herangeführt werden und den Kontakt herstellen. Insbesondere sind dazu an den Abstandhaltern der Fahrdrähte Senderbausteine vorgesehen, die die Detektion der Position der Fahrdrähte erleichtern.

Die Stromabnehmeranordnung kann in einem Beförderungssystem zur Beförderung von Personen und/oder Gütern entlang wenigstens eines Beförderungsweges verwendet werden. Ein solches Beförderungssystem kann enthalten
(a) ein Fahrdrahtsystem mit zwei Fahrdrähten, welches sich zumindest über eine Teilstrecke des Beförderungsweges erstreckt; und
(b) wenigstens ein Fahrzeug mit der beschriebenen, erfindungsgemäßen Stromabnehmeranordnung.

Die Erfindung kann mit bekannten Fahrdrahtsystemen eingesetzt werden. Beim Neubau oder bei der Nachrüstung der Fahrdrahtsysteme kann aber insbesondere vorgesehen sein, dass die Fahrdrähte zumindest über eine Teilstrecke des Fahrdrahtsystems gewinkelt zueinander verlaufen. Dann laufen die Gleitflächen an den Fahrdrähten auf und ab und werden gezielt gleichmäßig abgerieben. Eine Rillenbildung wie bei bekannten Gleitschuhen, kann auf diese Weise vermieden werden.

Die gewinkelten Fahrdrähte können erreicht werden durch mehrere Abstandshalter zwischen den Fahrdrähten entlang der Fahrstrecke, mit welchen der Abstand zwischen den Fahrdrähten fixierbar ist. Insbesondere kann dabei vorgesehen sein, dass die Abstandshalter unterschiedliche Längen haben. Dabei können die Abstandshalter langgestreckt sein und sich in einer horizontalen Ebene erstrecken. Dann haben die Fahrdrähte immer die gleiche Höhe und nur einen unterschiedlichen horizontalen Abstand. Es ist aber auch möglich, die Höhe eines oder beider Fahrdrähte zu variieren, so dass unterschiedliche Bereiche der Gleitflächen kontaktiert und abgerieben werden und der Stromabnehmerkopf seine Höhe beibehalten kann.

Bei einer alternativen Ausgestaltung der Erfindung sind die Abstandshalter beispielsweise bogenförmig oder mehrfach abknickend ausgebildet, wobei sich der Bogen in einer Ebene senkrecht zur Fahrtrichtung erstreckt. Bei dieser Ausgestaltung können die Gleitflächen auf der Außenseite des Stromabnehmerkopfes angeordnet sein.

Die Fahrdrähte können einen runden Querschnitt haben. Insbesondere, wenn keine rotationssymmetrischen Querschnitte vorliegen, kann es sinnvoll sein, wenn die Fahrdrähte eine Kontaktfläche aufweisen, welche zumindest teilweise seitlich ausgerichtet ist. Der Winkel der seitlichen Ausrichtung kann an den Neigungswinkel der Gleitfläche angepasst sein. Dadurch wird ein besonders guter Kontakt und ein definierter, flächiger Abrieb erreicht.

Die erfindungsgemäße Anordnung kann zum Um- oder Nachrüsten bestehender Fahrzeugflotten verwendet werden. Es können aber auch neue Fahrzeuge gefertigt werden, die elektrisch angetrieben und fahrdrahtgespeist sind.

Ausgestaltungen der Erfindung sind Gegenstand der Unteransprüche. Ein Ausführungsbeispiel ist nachstehend unter Bezugnahme auf die beigefügten Zeichnungen näher erläutert.

### Definitionen

In dieser Beschreibung und in den beigefügten Ansprüchen haben alle Begriffe eine dem Fachmann geläufige Bedeutung, welche der Fachliteratur, Normen und den einschlägigen Internetseiten und Publikationen, insbesondere lexikalischer Art, beispielsweise www.Wikipedia.de, www.wissen.de oder www.techniklexikon.net, der Wettbewerber, forschenden Institute, Universitäten und Verbände, beispielsweise Verein Deutscher Ingenieure, dargelegt sind. Insbesondere haben die verwendeten Begriffe nicht die gegenteilige Bedeutung dessen, was der Fachmann den obigen Publikationen entnimmt.

### Kurze Beschreibung der Zeichnung

- Fig.1a: ist eine schematische Darstellung eines Vertikalschnitts senkrecht zur Fahrtrichtung durch ein Fahrdrahtsystem und einen darunter geführten Stromabnehmerkopf, bei dem die Gleitflächen innen liegen und einander zugewandt sind.
- Fig.1b: ist eine schematische Darstellung eines Vertikalschnitts senkrecht zur Fahrtrichtung durch ein Fahrdrahtsystem und einen darunter geführten Stromabnehmerkopf, bei dem die Gleitflächen außen liegen und einander abgewandt sind.
- Fig.2: ist eine schematische Darstellung einer Draufsicht auf ein Fahrdrahtsystem mit Abstandshaltern unterschiedlicher Länge.
- Fig.3: ist eine schematische Darstellung eines Vertikalschnitts senkrecht zur Fahrtrichtung eines Abstandshalters für ein Fahrdrahtsystem, der einen Sender aufweist.
- Fig.4: ist eine schematische Darstellung der Führung des Stromabnehmerkopfes mit drei gleichlangen Stangen deren Anfangs- und Endpunkte Ebenen definieren, die somit immer parallel und gleichausgerichtet bleiben.
- Fig.5: zeigt einen O-Bus mit dem in Figur 1 illustrierten Stromabnehmerkopf.

### Beschreibung der Ausführungsbeispiele

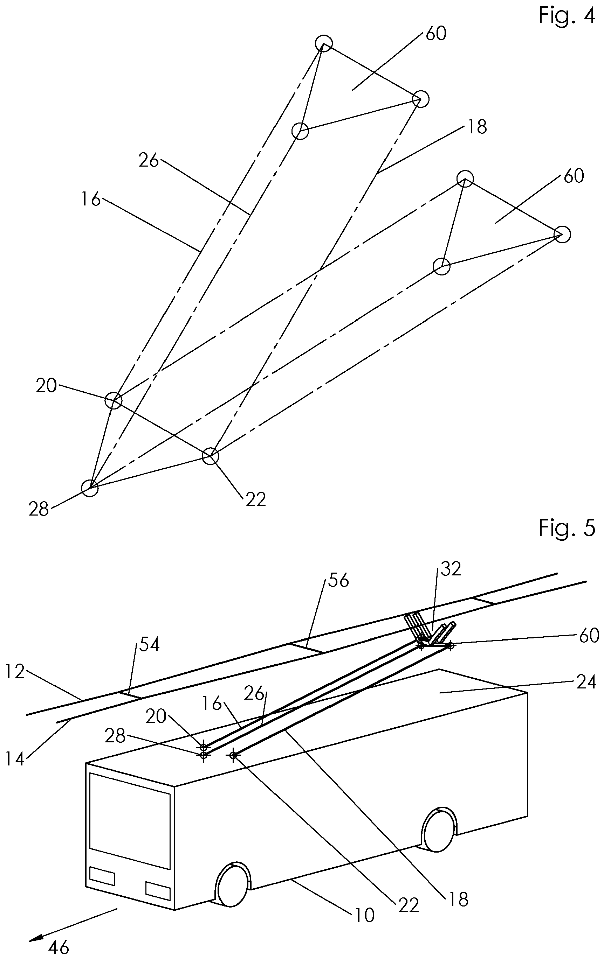

Figur 5 zeigt ein allgemein mit 10 bezeichnetes Fahrzeug. Die Fahrtrichtung des Fahrzeugs ist in Figur 5 durch einen Pfeil 46 repräsentiert. Im vorliegenden Ausführungsbeispiel ist das Fahrzeug 10 ein Oberleitungsbus. Es versteht sich, dass auch andere Fahrzeuge verwendet werden können, etwa zum Transport von Gütern oder dass kleinere Fahrzeuge mit oder ohne Anhänger vorgesehen sein können. Das Fahrzeug ist nicht schienengebunden. Das Fahrzeug 10 weist einen Elektromotor als Fahrantrieb und einen Akkumulator als Energiespeicher auf. Dabei ist es unschädlich, wenn das Fahrzeug 10 zusätzlich auch einen Verbrennungsmotor oder eine Brennstoffzelle aufweist. Das Fahrzeug 10 weist ferner verschiedene Verbraucher elektrischer Energie auf, wie Heizung, Klimaanlage, Beleuchtung, Türsteuerungen etc.

Oberhalb des Fahrweges verläuft eine Fahrleitung mit zwei Fahrdrähten 12 und 14, auch als Oberleitung bezeichnet. Die Fahrdrähte 12 und 14 verlaufen bis auf die nachstehend beschriebene Abstands- oder Winkelabweichung im Wesentlichen parallel und dienen in einer für Oberleitungsbusse üblichen Weise zur Energieversorgung des Fahrzeugantriebs und der weiteren Verbraucher. Zur Energieübertragung ist eine nachstehend beschriebene Stromabnehmer-Anordnung vorgesehen.

Die Stromabnehmer-Anordnung umfasst zwei stangenförmige Stromabnehmer 16 und 18 und eine Führungsstange 26. Die Stromabnehmer 16 und 18 und die Führungsstange 26 sind mit Gelenken 20, 22 und 28 in Form von Kugel- oder Kardangelenken an das Dach 24 des Fahrzeugs 10 angelenkt. Am anderen Ende sind die Stromabnehmer 16 und 18 ebenfalls flexibel an der Ebene 60 des Stromabnehmerkopfes 32 angelenkt. Eine oder mehrere Stangen sind mit Federn ausgerüstet oder können pneumatisch, über Stelltriebe oder hydraulisch um eine vertikale Achse und nach oben geschwenkt werden. Dabei bleiben die Drehpunkte 20, 22 und 28 auf dem Fahrzeugdach erhalten. Dies ist in Figur 4 schematisch illustriert.

Die Gelenke 20, 22 und 28 sind Kugel- oder Kardangelenke und um eine vertikale Achse drehbar ausgebildet. Die Gelenke 20, 22 und 28 erlauben somit eine seitliche Schwenkung der Stangen 16, 18 und 26. Dies ist insbesondere dann von Vorteil, wenn das Fahrzeug nicht genau unter den Fahrdrähten 12 und 14 bewegt wird.

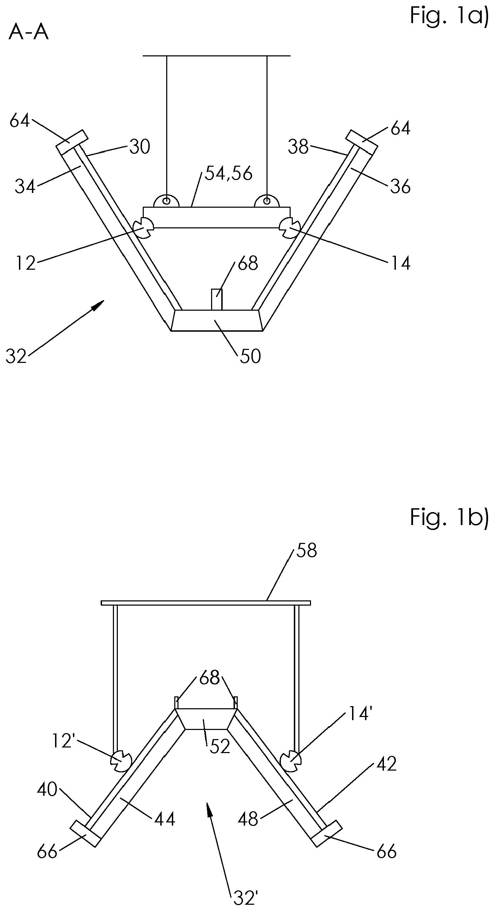

An den, den Gelenken 20, 22 und 28 abgewandten Enden der Stangen ist ein Stromabnehmerkopf 32 über drei Kardangelenke oder wahlweise Kugelgelenke flexibel befestigt. Dadurch sind sie mit der Ebene 60 fest verbunden. Der Stromabnehmerkopf 32 umfasst zwei Gleitstücke 34 und 36. Die Gleitstücke 34 und 36 weisen jeweils eine plane Gleitfläche 30 und 38 auf. In einem ersten Ausführungsbeispiel sind die Gleitflächen 30 und 38 im Querschnitt V-förmig angeordnet und auf der einander zugewandten Seite der Gleitstücke 34 und 36 angeordnet. Dies ist in Figur 1a) illustriert. In einem zweiten, alternativen Ausführungsbeispiel sind die Gleitflächen 40 und 42 umgekehrt V-förmig (großes Lambda A) angeordnet. In diesem Ausführungsbeispiel sind die Gleitflächen 40 und 42 auf der einander abgewandten Seite der Gleitstücke 44 und 48 angeordnet. Dies ist in Figur 1b) illustriert.

Am oberen Ende der Gleitstücke 34 und 36 ist ein Entgleisungsschutz in Form von Entgleisungsschutzelementen 64 vorgesehen. Am unteren Ende der Gleitstücke 44 und 48 ist ein Entgleisungsschutzelement 66 vorgesehen. Die Entgleisungsschutzelemente 64 bzw. 66 verhindern aufgrund ihrer Geometrie ein ungewolltes Hinauslaufen des Fahrdrahtes aus dem Stromabnehmerkopf. Gleichzeitig sind die Entgleisungsschutzelemente so geformt, dass sie ein ungehindertes An- und Abdrahten ermöglichen.

Die Gleitstücke 34 und 36 sind über einen elektrischen Isolator 50 miteinander verbunden. Die Gleitstücke 44 und 48 sind über einen elektrischen Isolator 52 miteinander verbunden. Die Verbindung ist dergestalt, dass die Geometrie des Stromabnehmerkopfes fest ist und in der V-Form bzw. A-Form erhalten bleibt. Auf dem Isolator 50 bzw. 52 befinden sich beidseitige Anschläge 68, um ein Hinüberlaufen des Fahrdrahtes auf das jeweils andere Gleitstück zu verhindern.

Über die Gleitstücke 34 und 36 bzw. 44 und 48 und die stangenförmigen Stromabnehmer 16 und 18 wird elektrische Energie während der Fahrt aus dem Fahrdrahtsystem auf die Fahrzeugantriebe und ein Bordnetz oder sonstige Verbraucher übertragen.

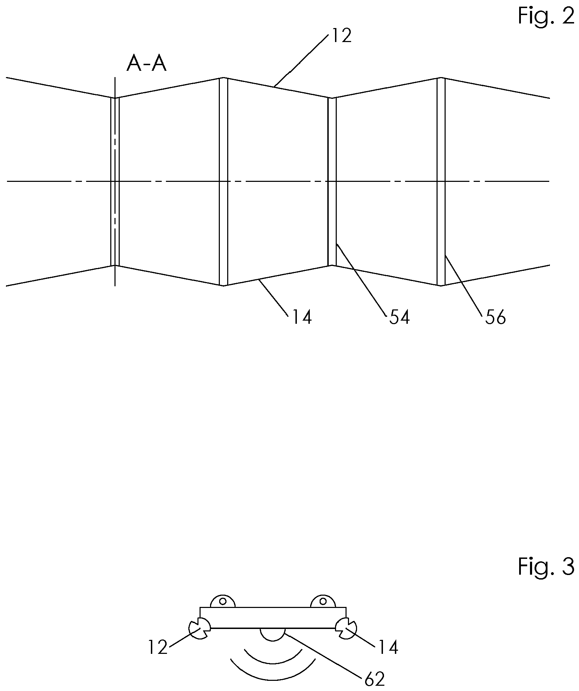

Die Fahrdrähte 12 und 14 haben einen pilzförmigen Querschnitt, wie dies in Figur 1 und Figur 3 illustriert ist. Der Kontakt mit der Gleitfläche 30 bzw. 38 erfolgt über den abgerundeten Bereich der Fahrdrähte 12 und 14. Zu diesem Zweck ist der Kontaktbereich der Fahrdrähte der Gleitfläche 30 bzw. 38 zugewandt. Im Ausführungsbeispiel in Figur 1a) zeigen die abgerundeten Flächen nach außen. Im Ausführungsbeispiel in Figur 1b) zeigen die abgerundeten Flächen nach innen.

Zwischen den Fahrdrähten 12 und 14 können bei einigen Ausführungsbeispielen Abstandshalter 54 und 56 angeordnet sein. Die Abstandshalter 54 und 56 sind alternierend oder graduell abgestuft kürzer oder länger als ihre jeweiligen Nachbarn. Der Abstand zwischen den Fahrdrähten 12 und 14 variiert daher, so dass die Fahrdrähte einen zick-zackförmigen Verlauf haben. Es ist leicht einsehbar, dass der Stromabnehmerkopf 32 aufgrund der V-Form der Gleitflächen 30 und 38 eine etwas höhere Lage einnimmt, wenn der Abstand zwischen den Fahrdrähten 12 und 14 gering ist und eine etwas tiefere Lage, wenn der Abstand zwischen den Fahrdrähten 12 und 14 größer ist.

Im Ausführungsbeispiel nach Figur 1b ist statt eines linearen Abstandshalters ein rahmenförmiger Halter 58 vorgesehen. Bei diesem Ausführungsbeispiel sind die abgerundeten Kontaktflächen der Fahrdrähte 12' und 14' nach innen ausgerichtet. In den Bereichen, wo der Rahmen 58 die Fahrdrähte 12' und 14' mit geringem Abstand zusammenhält, befinden sich die Kontaktbereiche höher als in den Bereich, wo der Rahmen 58 die Fahrdrähte in größerem Abstand zusammenhält.

Der variable Verlauf des Abstands zwischen den Fahrdrähten 12 und 14 führt also zu einer vertikalen Bewegung des Stromabnehmerkopfes 32 während der Fahrt. Dadurch wird erreicht, dass der Abrieb an verschiedenen Stellen der Gleitflächen 30 und 38 bzw. 40 und 42 erfolgt. Die Gleitflächen werden gleichmäßiger abgerieben und müssen folglich seltener ausgetauscht werden.

Figur 4 zeigt die Stromabnehmer-Anordnung in einer Betriebsposition und in einer Ruheposition. In der Ruheposition liegen die Stromabnehmer 16 und 18 und die Führungsstange 26 auf dem Dach 24 des Fahrzeugs 10 auf. Das Fahrzeug 10 kann so auch auf Strecken ohne Energieversorgung über Fahrdrähte 12 und 14 fahren. Dann wird der Elektroantrieb aus dem Akkumulator mit elektrischer Energie versorgt. Das Fahrzeug 10 erreicht damit auch entferntere Ortschaften und Routen ohne Fahrdraht-Infrastruktur. Wenn das Fahrzeug 10 wieder auf eine Route mit Fahrdrähten gelangt, muss der Stromabnehmerkopfe 32 wieder nach oben bewegt werden. Man erkennt, dass das Dreieck 60 immer die gleiche Ausrichtung hat und die Stangen 16, 18 und 26 bei jeder Bewegung, auch bei einer seitlichen Bewegung, immer in einer parallelen und gleich ausgerichteten Ebene liegen.

Ein Sender 62 an Abstandsstücken des Fahrdrahtsystems erlaubt es dem darunter fahrenden Fahrzeug 10 die Fahrleitung zu detektieren. Der Sender kann beispielsweise von einer aktiven Antenne gebildet sein. Die Stangen 16, 18 und 26 werden dann so gestellt, dass der Stromabnehmerkopf 32 die Fahrleitung kontaktiert.

Zur Erreichung einer Betriebsposition drücken die (nicht dargestellten) Stromabnehmerhauptfedern den Stromabnehmerkopf 32 nach oben bis die Gleitflächen auf die Fahrdrähte treffen. Dann kann Strom fließen. Das eingedrahtete Fahrzeug 10 wird in herkömmlicher Weise über die Fahrdrähte 12 und 14 mit elektrischer Energie versorgt.

Der Vorteil der V-förmigen oder umgekehrt V-förmigen Anordnung der Gleitstücke 34 und 36 bzw. 40 und 42 besteht darin, dass während der Fahrt auf aktive Stellvorgänge verzichtet werden kann und die seitlichen und vertikalen Direktionskräfte durch diese Form aufgenommen werden können.

Es ist besonders vorteilhaft, dass der Akkumulator während der Fahrzeit über diese Energieversorgung aufgeladen wird. Dadurch werden die Standzeiten, die bei üblichen Elektromobilen zum Aufladen erforderlich sind, vermieden. Die hinreichend langen Fahrzeiten im Bereich der Fahrdrähte machen auch eine batterieschonende Aufladung mit geringen Ladeleistungen möglich.

Auch wenn das Fahrzeug 10 einen seitlichen Versatz aufweist, kann es sich der Fahrleitung nach dem Kriterium der Signalstärke nähern und den Stromabnehmerkopf 32 an die Fahrleitung heranführen. Dabei wird der horizontalen Bewegung der Vorrang gegeben, sodass sich der Stromabnehmerkopf 32 vorzugsweise von unten nähert.

Für Fahrzeuge 10 mit einem hohen Strombedarf können zwei Gleitstücke 34 und 36 bzw. 44 und 48 gleicher Ausrichtung direkt hintereinander gesetzt werden. Hierdurch wird die Kontaktfläche wesentlich vergrößert. Mit zwei oder sogar mehr hintereinander angeordneten Gleitstücken können größere Leistungen übertragen werden. Eine vertikale Federung bewirkt, dass die Schleifleistenstücke immer gegen den Fahrdraht drücken.

Die oben erläuterten Ausführungsbeispiele dienen der Illustration der in den Ansprüchen beanspruchten Erfindung. Merkmale, welche gemeinsam mit anderen Merkmalen offenbart sind, können in der Regel auch alleine oder in Kombination mit anderen Merkmalen, die im Text oder in den Zeichnungen explizit oder implizit in den Ausführungsbeispielen offenbart sind, verwendet werden. Maße und Größen sind nur beispielhaft angegeben. Dem Fachmann ergeben sich geeignete Bereiche aus seinem Fachwissen und brauchen hier daher nicht näher erläutert zu werden. Die Offenbarung einer konkreten Ausgestaltung eines Merkmals bedeutet nicht, dass die Erfindung auf diese konkrete Ausgestaltung beschränkt werden soll. Vielmehr kann ein solches Merkmal durch eine Vielzahl anderer, dem Fachmann geläufigen Ausgestaltungen verwirklicht werden. Die Erfindung kann daher nicht nur in Form der erläuterten Ausgestaltungen verwirklicht werden, sondern durch alle Ausgestaltungen, welche vom Schutzbereich der beigefügten Ansprüche abgedeckt sind.

Es versteht sich, dass unter dem Begriff "V-förmig" alle Formen gemeint sind, bei denen die Führung das Abstandselement zentriert. Entsprechend fallen auch leicht gekrümmte Schenkel des "V" unter diese Definition. Je nach Lage des Fahrdrahtes können auch ungleich lange Schenkel am Abstandselement vorgesehen sein, wenn die Führung 40 nicht genau mittig zu den Fahrdrähten verläuft.

Die Begriffe "oben", "unten", "rechts" und "links" beziehen sich ausschließlich auf die beigefügten Zeichnungen. Es versteht sich, dass beanspruchte Vorrichtungen auch eine andere Orientierung annehmen können. Der Begriff "enthaltend" und der Begriff "umfassend" bedeuten, dass weitere, nicht-genannte Komponenten vorgesehen sein können. Unter dem Begriff "im Wesentlichen", "vorwiegend" und "überwiegend" fallen alle Merkmale, die eine Eigenschaft oder einen Gehalt mehrheitlich, d.h. mehr als alle anderen genannten Komponenten oder Eigenschaften des Merkmals aufweisen, also bei zwei Komponenten beispielsweise mehr als 50%.

## Patentansprüche

1. Stromabnehmer-Anordnung für doppelpolige Fahrdrähte (12, 14) von fahrdrahtgespeisten Fahrzeugen (10), die auch unabhängig vom Fahrdrahtsystem fahren können, enthaltend
(a) eine oder mehrere gelenkig an einem Fahrzeug (10) befestigbare Stromabnehmerstangen (16, 18); und
(b) wenigstens zwei Gleitflächen (30, 38; 40, 42) zur Kontaktierung der Stromabnehmer-Anordnung mit den Fahrdrähten (12, 14) eines Fahrdrahtsystems;
**dadurch gekennzeichnet, dass**
(c) die Gleitflächen (30, 38; 40, 42) von jeweils ebenen Flächen gebildet sind, von denen jede mit der vertikalen Ebene parallel zur Fahrtrichtung einen Winkel bildet, so dass die Kontaktierung an den Fahrdrähten zumindest teilweise seitlich erfolgt.

2. Stromabnehmer-Anordnung nach Anspruch 1, **dadurch gekennzeichnet, dass** die die Gleitflächen (30, 38; 40, 42) V-förmig oder umgekehrt V-förmig zueinander angeordnet sind.

3. Stromabnehmer-Anordnung nach einem der vorgehenden Ansprüche, **dadurch gekennzeichnet, dass** die Gleitflächen (30, 38; 40, 42) an Gleitstücken (34, 36) vorgesehen sind, welche mit einem elektrisch isolierenden Abstandshalter (54, 56) Teil eines gemeinsamen Stromabnehmerkopfes (32) bilden.

4. Stromabnehmer-Anordnung nach einem der vorgehenden Ansprüche, **dadurch gekennzeichnet, dass** an den Enden der Gleitflächen (30, 38; 40, 42) jeweils eine vorspringende Kante oder andere Entgleisungsschutzelemente (64) vorgesehen sind und/oder zwischen den Gleitflächen Anschläge (68) vorgesehen sind, welche ein Hinüberlaufen des Fahrdrahtes zur jeweils anderen Gleitfläche verhindern.

5. Stromabnehmer-Anordnung nach einem der vorgehenden Ansprüche, **dadurch gekennzeichnet, dass** wenigstens zwei Paare ebener Gleitflächen (30, 38; 40, 42) an einem gemeinsamen Stromabnehmerkopf (32) vorgesehen sind.

6. Stromabnehmer-Anordnung nach einem der vorgehenden Ansprüche, **dadurch gekennzeichnet, dass** ein gemeinsamer Stromabnehmerkopf (32) gelenkig mit den Stromabnehmerstangen (16, 18) verbunden ist, welche an ein Fahrzeug (10) anlenkbar sind und deren Bewegungen derart geführt sind, dass die Stromabnehmerstangen (16, 18) stets in einer gemeinsamen Ebene angeordnet sind.

7. Stromabnehmer-Anordnung nach einem der vorgegebenen Ansprüche, **dadurch gekennzeichnet, dass** eine oder mehrere Stangen (26), Seile oder andere Führungselemente an einen gemeinsamen Stromabnehmerkopf angelenkt sind.

8. Stromabnehmer-Anordnung nach einem der vorgehenden Ansprüche, **gekennzeichnet durch** einen Federmechanismus oder eine andere Andrückeinrichtung zum Andrücken der Gleitflächen an die Fahrdrähte (12, 14).

9. Stromabnehmer-Anordnung nach einem der vorgehenden Ansprüche, **gekennzeichnet durch** eine Stellvorrichtung, welche mit den Signalen eines Sensors zur Erfassung eines Fahrdrahtsystems beaufschlagt ist und die Gleitflächen (30, 38; 40, 42) mit den Fahrdrähten (12, 14) kontaktierbar ist.

10. Elektrisch angetriebenes, aus einem doppelpoligen Fahrdraht speisbares Fahrzeug (10), das auch unabhängig vom Fahrdrahtsystem (12, 14) fahren kann, **gekennzeichnet durch** eine Stromabnehmer-Anordnung nach einem der vorgehenden Ansprüche.

11. Beförderungssystem zur Beförderung von Personen und/oder Gütern entlang wenigstens eines Beförderungsweges; enthaltend
(a) ein Fahrdrahtsystem mit zwei Fahrdrähten (12, 14), welches sich zumindest über eine Teilstrecke des Beförderungsweges erstreckt; und
(b) wenigstens ein Fahrzeug (10) nach Anspruch 10.

12. Beförderungssystem nach Anspruch 11, **dadurch gekennzeichnet, dass** die Fahrdrähte (12, 14) zumindest über eine Teilstrecke des Fahrdrahtsystems gewinkelt zueinander verlaufen.

13. Beförderungssystem nach Anspruch 11 oder 12, **gekennzeichnet durch** mehrere, wenigstens teilweise elektrisch isolierend ausgebildete Abstandshalter (54, 56) zwischen den Fahrdrähten (12, 14) entlang der Fahrstrecke, mit welchen der Abstand zwischen den Fahrdrähten fixierbar ist, wobei die Abstandshalter langgestreckt sind und unterschiedliche Längen haben und/oder sich in einer horizontalen Ebene erstrecken oder bogen- oder rahmenförmig ausgebildet sind, wobei sich der Bogen oder Rahmen in einer Ebene senkrecht zur Fahrtrichtung erstreckt.

14. Beförderungssystem nach einem der Ansprüche 11 bis 13, **dadurch gekennzeichnet, dass** die Fahrdrähte Kontaktflächen aufweisen, welche zumindest teilweise seitlich ausgerichtet sind.

15. Beförderungssystem nach einem der Ansprüche 11 bis 14, **dadurch gekennzeichnet, dass** wenigstens ein Sender (62) im Bereich der Fahrdrähte (12, 14), vorzugsweise an einem oder mehreren Abstandshaltern vorgesehen ist, dessen Signale von einem Empfänger an der Stromabnehmer-Anordnung empfangbar sind.
